# EUROPÄISCHE PATENTSCHRIFT

(11) **EP 2 661 966 B1**
(45) Veröffentlichungstag und Bekanntmachung des Hinweises auf die Patenterteilung: **28.12.2016**
(21) Anmeldenummer: 13164217.5
(22) Anmeldetag: 18.04.2013
(51) Int. Cl.: A22C 11/10, H05B 6/78

(54) **Vorrichtung zum Behandeln eines Wurststrangs**
Device for treating a string of sausages
Dispositif de traitement d'un chapelet de saucisses

(30) Priorität: 09.05.2012 DE 102012009077
(43) Veröffentlichungstag der Anmeldung: 13.11.2013
(73) Patentinhaber: HOWE Wurstwaren KG, 90451 Nürnberg (DE)
(72) Erfinder: Singer, Manfred, 92334 Berching (DE)
(74) Vertreter: Blaumeier, Jörg

(56) Entgegenhaltungen:
- EP-A2- 0 075 106
- EP-A2- 2 332 416
- WO-A2-2011/143452
- US-A- 4 441 003

## Beschreibung

Die Erfindung betrifft eine Vorrichtung zum Behandeln eines Wurststrangs bestehend aus mehreren hintereinander angeordneten Würsten mit einer Wursthülle aus einem organischen Material, die im Bereich zwischen zwei Würsten eine Abdrehung aufweist.

Zur Herstellung von Würsten wird üblicherweise mittels einer Füllmaschine das Wurstbrät durch ein Füllrohr in eine schlauchförmige Wursthülle gepresst. Mittels eines Abdrehmechanismus werden die einzelnen Wurstportionen, also die einzelnen Würste selber, gebildet, indem der Wurststrang gedreht wird, sodass sich der Strang lokal und unter Bildung einer Abdrehung der Wursthülle einschnürt (vgl. EP 2 332 416 A2). Die einzelnen Würste sind also über eine solche hüllenseitige Abdrehung voneinander getrennt. Der auf diese Weise gebildete Wurststrang wird sodann mittels einer Vereinzelungsvorrichtung getrennt. Hierzu wird der Wurststrang von zwei Förderbändern gegriffen, die den Wurststrang mit definierter Geschwindigkeit zu einer Schneideinrichtung transportieren, wo die einzelnen Würste im Bereich der Abdrehung getrennt werden. Die Vereinzelung erfolgt üblicherweise mittels zweier gegenläufiger oder rotierender Messer, die im Schnitt zusammenwirken, wobei eines der Messer auch als reiner Gegenhalter ausgeführt sein kann.

Bei vielen Wurstsorten wird als Wursthülle ein Naturdarm verwendet, also ein organisches Darmmaterial. Da es sich um ein natürliches Material handelt, weist es zwangsläufig keine homogene Dicke auf, vielmehr variiert die Materialdicke über die Darmlänge. Im Bereich der Abdrehungen, wo der Darm also zusammengedreht ist, ergibt sich zum einen ein relativ dicker Materialabschnitt, zum anderen kann dessen Dicke aufgrund unterschiedlicher Darmstärken von Abdrehung zu Abdrehung variieren. Auch ist das Darmmaterial sehr weich und elastisch. Diese Umstände bedingen, dass hohe Anforderungen an die Schneideinrichtung gestellt werden, das heißt, dass die Messer bzw. das Messer und der Gegenhalter extrem exakt und mit hoher Schneidkraft schneiden müssen, um die vollständige Durchtrennung sicherzustellen. Auch muss die Schneideinrichtung in der Lage sein, ohne Weiteres unterschiedliche Abdrehungsdicken sicher trennen zu können. Alternativ kann auch ein Hüllmaterial aus Kunststoff verwendet werden, das im Bereich der Abdrehungen ebenfalls zu schneiden ist, um die Würste zu trennen, wobei auch hier wegen der Elastizität des Kunststoffmaterials hohe Anforderungen an die Schneideinrichtung gestellt sind.

Der Erfindung liegt das Problem zugrunde, eine Vorrichtung zum Behandeln eines Wurststrangs anzugeben, die eine Behandlung des Wurststrangs derart ermöglicht, dass auf einfache Weise eine Vereinzelung der Würste ermöglicht. den Einsatz einer nachgeschalteten Schneideinrichtung verzichtet werden kann.

Zur Lösung dieses Problems zeichnet sich eine erfindungsgemäße Vorrichtung zum Behandeln eines Wurststrangs dadurch aus, dass wenigstens zwei Mikrowellenapplikatoren mit jeweils wenigstens einer zugeordneten Mikrowellenerzeugungseinrichtung zum Erzeugen von den Mikrowellenapplikatoren zuzuführender Mikrowellenstrahlung vorgesehen sind, denen jeweils eine separate Transporteinrichtung umfassend jeweils zwei übereinander liegende umlaufende Förderbänder zum Transportieren des Wurststrangs durch die Mikrowellenapplikatoren zugeordnet sind, wobei die Mikrowellenapplikatoren mit ihren zugeordneten Transporteinrichtungen hintereinander angeordnet sind, und wobei sowohl die Mikrowellenerzeugungseinrichtungen hinsichtlich der Leistung der erzeugten Mikrowellenstrahlung als auch die Transporteinrichtungen hinsichtlich der jeweiligen Transportgeschwindigkeit separat ansteuerbar sind.

Mittels der erfindungsgemäßen Vorrichtung ist es möglich, den Wurststrang durch Applikation von Mikrowellenstrahlung thermisch zu behandeln, also Energie zuzuführen, die zu einer Erwärmung des behandelten Materials führt. Die Mikrowellenstrahlung kann nur im Bereich der Abdrehungen durch entsprechende Ansteuerung der Mikrowellenerzeugungseinrichtungen appliziert werden, d. h., dass die Strahlung getaktet erzeugt wird, wozu über eine geeignete Erfassungseinrichtung (Sensorik) erfasst wird, wann eine Abdrehung im Applikationsbereich eines der wenigstens zwei vorgesehenen Applikatoren ist. Bevorzugt aber wird die Mikrowellenstrahlung kontinuierlich zugeführt, d. h., dass der gesamte Wurststrang, also Würste und Abdrehungen, mittels der Mikrowellenstrahlung beaufschlagt werden.

Hierzu zeichnet sich die erfindungsgemäße Vorrichtung durch wenigstens zwei in Transport- respektive Stranglängsrichtung hintereinander angeordnete Mikrowellenapplikatoren aus. Jedem Mikrowellenapplikator ist wenigstens eine eigene Mikrowellenerzeugungseinrichtung zugeordnet, d. h., dass jeder Applikator separat mit erzeugter Mikrowellenstrahlung gespeist wird. Des Weiteren ist jedem Mikrowellenapplikator eine separate Transporteinrichtung zugeordnet, die den Wurststrang durch den Applikator zur Beaufschlagung mit der erzeugten Mikrowellenstrahlung transportiert. Auch diese Transporteinrichtungen sind in Förderrichtung hintereinander angeordnet, d. h., dass der Wurststrang von der einen Transporteinrichtung erfasst, durch den ersten Applikator transportiert, auf die zweite Transporteinrichtung übergeben und mittels dieser auch durch den zweiten Mikrowellenapplikator gefördert wird. Sofern natürlich drei oder mehr Mikrowellenapplikatoren mit zugeordneten Fördereinrichtungen hintereinander angeordnet sind, setzt sich diese Übergabe und separate Strahlungsbehandlung weiter fort. Alle Vorrichtungselemente sind an einem gemeinsamen Vorrichtungsgestell angeordnet, d. h., dass die Vorrichtung selbst eine in sich geschlossene, vorzugsweise über Rollen sehr einfach transportable Einheit ist.

Die erzeugte Mikrowellenstrahlung wird dem jeweiligen Mikrowellenapplikator zugeführt. Die jeweilige Transporteinrichtung transportiert den Wurststrang durch den jeweiligen Mikrowellenapplikator, wo der Wurststrang sodann in einem definierten Applikationsbereich der Mikrowellenstrahlung ausgesetzt wird. Während der Strahlungsapplikation kommt es zu einem Energieeintrag, der zu einer Materialerwärmung führt. Da es sich bei dem Hüllmaterial entweder um ein natürliches, organisches Material handelt, nämlich einen tierischen Darm, oder einen Kunstdarm, also ein ebenfalls organisches Kunststoffmaterial, kommt es in Folge des Energieeintrags und der daraus resultierenden Erwärmung zu einer Veränderung des Materials bzw. der Materialstruktur. Es setzt im Falle des Naturdarms ein Koagulationsprozess ein, d. h., dass Eiweiße bzw. Proteine ihre Struktur verändern und koagulieren. Dieser Prozess setzt bei einer Temperatur von üblicherweise mehr als 40°C ein. Je mehr Energie eingetragen wird, umso höher ist die Erwärmung und umso stärker der Koagulationsprozess. Diese Koagulation führt wiederum zu einer Versprödung bzw. Verhärtung des Materials, d. h., dass sich das organische Hüllenmaterial versteift und seine Flexibilität verliert. Im Fall eines Kunstdarms führt der Energieeintrag und die Erwärmung zu einem Aufbruch der Bindungen und zu Vernetzungsvorgängen, woraus ebenfalls eine Versprödung resultiert. Je höher und je schneller der Energieeintrag ist, umso höher ist der Koagulations- oder Vernetzungsgrad und umso größer der Grad der querschnittsmäßig gesehen einsetzenden Versprödung.

Es hat sich nun herausgestellt, dass mittels der erfindungsgemäßen Vorrichtung ein hinreichend hoher Energieeintrag eingebracht werden kann, sodass es zu einer derart starken Versprödung der Abdrehungen kommt, dass diese spätestens beim Verlassen des zweiten Mikrowellenapplikators aufgetrennt vorliegen, mithin also die Würste vereinzelt sind. Denn neben dem Versprödungsprozess setzt auch eine Materialschrumpfung ein, die dazu führt, dass es während der Versprödung zu einem Aufbrechen in Folge der gegebenen bzw. auf die Abdrehung dann schrumpfungsbedingt einwirkenden mechanischen Kräfte kommt. D. h., dass durch Applikation der Mikrowellenstrahlung automatisch bereits eine Vereinzelung der Würste stattfindet, sodass eine separate Schneideinrichtung entfallen kann, da die Würste bereits vereinzelt vorliegen.

Die Applikation der Mikrowellenstrahlung auch auf die Wurst selbst führt ebenfalls zu einer leichten koagulationsbedingten oder vernetzungsbedingten Materialveränderung der Wursthülle und damit zu einer gewissen Versteifung, jedoch nicht vergleichbar mit der extremen Versprödung bis hin zum Bruch im Bereich der Abdrehungen. Denn im Wurstbereich wird die eingekoppelte thermische Energie über das kalte Wurstbrät oder die Wurstmasse abgeführt, sodass, bezogen auf die Wursthülle selbst, der dortige Energieeintrag deutlich geringer ist. Die leichte Versprödung der Wursthülle auch im Wurstbereich ist darüber hinaus sogar von Vorteil, als sich die Würste hierdurch insgesamt etwas versteifen und mithin ihre langgestreckte, gerade Form, die sie in Folge der Förderung auf den Transporteinrichtungen bestehend aus den beiden Förderbändern besitzen, letztlich auch nach der Behandlung weitgehend beibehalten, was für die nachfolgende Prozessierung der Würste beispielsweise im Rahmen einer Weiterförderung oder einer Verpackung oder Ähnlichem von Vorteil ist.

Entscheidend ist, dass wie ausgeführt ein hinreichender Energieeintrag im Bereich der aufzutrennenden Abdrehungen gegeben ist, sodass diese soweit verspröden, dass es zum Bruch und damit zur automatischen Wurstvereinzelung kommt. Hierzu sind bei der erfindungsgemäßen Vorrichtung zwei separate, einander nachgeschaltete Mikrowellenapplikatoren vorgesehen, denen jeweils eine separate Strahlungserzeugungseinrichtung zugeordnet ist. Diese beiden Mikrowellenstrahlungserzeugungseinrichtungen wie auch die zugeordneten Transporteinrichtungen umfassend die übereinanderliegenden Förderbänder sind erfindungsgemäße separat ansteuerbar, d. h., dass sie in ihrem Betrieb individuell steuerbar sind. Im Falle der Mikrowellenerzeugungseinrichtungen ist die Leistung der erzeugten Mikrowellenstrahlung beliebig und nach Bedarf einstellbar. D. h., dass die Strahlungsleistung der beiden Strahlungserzeugungseinrichtungen gleich sein kann, sie kann aber auch unterschiedlich sein. Das bedeutet, dass in Folge der individuellen Ansteuerung im Bedarfsfall ohne Weiteres reagiert werden kann, und die Vorrichtung nachgeregelt werden kann, sollte sich aus irgendwelchen Gründen während der Behandlung eines Wurststrangs herausstellen, dass der Versprödungsprozess nicht hinreichend weit geht, da zu wenig Energie eingetragen wird. In diesem Fall kann beispielsweise die zweite Mikrowellenerzeugungseinrichtung etwas nachgeregelt werden, sodass die dortseits erzeugte Mikrowellenstrahlung in ihrer Leistung bzw. Energieinhalt angehoben wird, sodass mithin an der zweiten Strahlungsapplikationsstelle, also im zweiten Mikrowellenapplikator, höher energetische Strahlung appliziert wird, und folglich die Abdrehung etwas stärker erwärmt und sichergestellt wird, dass es zum vollständigen Auftrennen kommt. Denkbar ist natürlich auch eine entsprechende Anhebung der Leistung der ersten Mikrowellenerzeugungseinrichtung, oder beider.

Im Falle der Transporteinrichtungen ist eine individuelle Anpassung der Transportgeschwindigkeiten möglich. Hierüber ist es ohne Weitere möglich, beide Transporteinrichtungen mit etwas unterschiedlicher Geschwindigkeit arbeiten zu lassen. Hierbei transportiert die erste Transporteinrichtung den Wurststrang etwas langsamer als die nachgeschaltete zweite Transporteinrichtung, sodass es im Bereich der Übergabe des Wurststrangs von der ersten auf die zweite Transporteinrichtung in Folge des gegebenen Geschwindigkeitsunterschieds zu einer leichten Längung respektive Zug auf den Wurststrang kommt. Dies führt dazu, dass folglich die bereits teilweise versprödeten oder verhärteten Abdrehungen unter Zugspannung gesetzt werden, mithin also in die Länge gezogen werden, was bereits dazu führen kann, dass es zum Abdrehungsbruch kommt. In jedem Fall aber stellt diese Zugspannung sodann sicher, dass im Rahmen der zweiten Strahlungsbehandlung im zweiten Mikrowellenapplikator die jeweilige Abdrehung aufbricht. Denn dort kommt es in Folge der Strahlungsapplikation zu einer weiteren, dann vollständigen Versprödung, die in Verbindung mit der Zugspannung dann endgültig zum Abdrehungsbruch führt. Auch in Folge der individuellen Ansteuerbarkeit der Transportgeschwindigkeiten der Förderbänder ist es möglich, unmittelbar auf etwaige sich im Prozess auftretende Umstände reagieren zu können. Denn eine entsprechende Geschwindigkeitserhöhung der zweiten Transporteinrichtung führt folglich zu einer etwas höheren eingetragenen Zugspannung in den Abdrehungsbereich, sodass die Abdrehung spätestens im Rahmen der zweiten Strahlungsbehandlung noch leichter bricht. Alternativ kann natürlich auch die Transportgeschwindigkeit der ersten Transporteinrichtung etwas reduziert werden.

In jedem Fall lässt die erfindungsgemäß vorgesehene individuelle Ansteuerbarkeit der wenigstens zwei Mikrowellenerzeugungseinrichtungen sowie der wenigstens zwei Transporteinrichtungen eine hochflexible Steuerung des Behandlungsvorgangs zu, sodass sichergestellt wird, dass am Ausgang der Vorrichtung auch wirklich alle Würste vereinzelt vorliegen, ohne dass es hierzu auch nur eines einzigen manuellen Schnittvorgangs unter Verwendung einer Schneideinrichtung bedarf. Denn die Vereinzelung erfolgt erfindungsgemäß ausschließlich durch die Strahlungsbehandlung in den Mikrowellenapplikatoren, die einen hohen, konzentrierten Strahlungseintrag ermögliche, sodass es zu der extremen Versprödung kommt. Dieser hoher Energieeintrag ist auch dann ohne Weiteres möglich, wenn der Wurststrang mit hoher Geschwindigkeit mittels der Transporteinrichtungen durch die Applikatoren hindurch gefördert wird, wobei je nach Wurstlänge mehrere 100 Würste pro Minute hindurch gefördert und vereinzelt werden können.

Ein weiterer besonderer Vorteil der erfindungsgemäß ermöglichten vollkommenen Versprödung der Abdrehungen besteht darin, dass jede Abdrehung "komplett verschweißt" ist, d. h., dass die getrennte Abdrehung koagulations- oder vernetzungsbedingt geschlossen ist und nicht aufgeht. Dieses Verschweißen ist von besonderem Vorteil für die nachfolgende Behandlung, sei es das Abtransportieren oder Verpacken, sei es beispielsweise ein nachfolgendes Brühen der Würste und Ähnliches, da ein Austritt des Wurstbräts aus einem Ende unterbunden ist, nachdem ein vollständiger Wurstverschluss gegeben ist.

Um die Strahlungsbehandlung in einem Applikator möglichst konzentriert vorzunehmen weist jeder Mikrowellenapplikator erfindungsgemäße wenigstens eine Kammer auf, durch die die jeweilige Transporteinrichtung läuft und der Wurststrang transportiert wird, welcher Kammer die Mikrowellenstrahlung zuführbar ist. Die Strahlung wird also in einer sehr kleinen Kammer konzentriert, um so gebündelt wie möglich den vorbeitransportierten Würsten und insbesondere den Abdrehungen zugeführt zu werden. Als Mikrowellenapplikator ist vorzugsweise ein Monomode-Applikator vorgesehen, der bewirkt, dass sich im Applikator eine stehende Welle ausbildet, die sich diskret in der Kammer verteilt. Applikatorgeometrie und Wellenlänge sind aufeinander abgestimmt. Die Wellenlänge liegt vorzugsweise zwischen 5 - 20 cm, insbesondere zwischen 10-15 cm und bevorzugt zwischen 11 - 13 cm, wobei eine konkrete Realisierungsform eine Wellenlänge von 12,4 cm bevorzugt. Die Leistung der einzelnen Mikrowellenerzeugungseinrichtungen sollte 1 - 50 kW, vorzugsweise 3 - 30 kW betragen.

Gemäße einer zweckmäßigen Weiterbildung der Erfindung sind an wenigstens einem Mikrowellenapplikator, vorzugsweise an beiden Applikatoren wenigstens zwei hintereinander angeordnete Kammern vorgesehen, durch die die jeweilige Transporteinrichtung läuft, und denen entweder simultan die mittels einer Mikrowellenerzeugungseinrichtung erzeugte Mikrowellenstrahlung zuführbar ist, oder denen jeweils eine eigene Mikrowellenerzeugungseinrichtung zugeordnet ist. Gemäß dieser Erfindungsausgestaltung sind also in jedem Mikrowellenapplikator zwei oder mehr hintereinander angeordnete, also kaskadiert vorgesehene Kammern vorgesehen, die der Strahlungsbehandlung dienen. In jeder Kammer wird eine konzentrierte, gebündelte Strahlungsapplikation vorgenommen. Die zugeführte Strahlung wird dabei entweder von einer applikatoreigenen, also für alle Kammern gemeinsam vorgesehenen Strahlungserzeugungseinrichtung erzeugt. Denkbar ist es aber auch, jeder Kammer eine eigene Erzeugungseinrichtung zuzuordnen. Sind also beispielsweise zwei Mikrowellenapplikatoren mit jeweils zwei Kammern vorgesehen, so sind folglich insgesamt vier kaskadierte einzelne Applikationskammern vorgesehen, sowie vier Strahlungserzeugungseinrichtungen. Dabei sind die mehreren Strahlungserzeugungseinrichtungen, die einem Applikator zugeordnet sind, entweder gemeinsam, also synchron ansteuerbar, wie aber auch hier selbstverständlich eine individuelle Ansteuerbarkeit gegeben ist. Sind die Strahlungserzeugungseinrichtungen nur gemeinsam synchron ansteuerbar, so ist folglich eine Leistungsvariation zwischen den Strahlungserzeugungeinrichtungen und des ersten Applikators relativ zu denen des zweiten Applikators möglich. Sind jedoch die Strahlungserzeugungseinrichtungen eines Applikators individuell ansteuerbar, so ist eine Leistungsvariation über sämtliche vier Erzeugungseinrichtungen möglich, sodass folglich ein vollständig individuelles Leistungsprofil längs der Transportstrecke eingestellt werden kann.

Da jede Kammer eines Applikators geometrisch möglichst klein und konzentriert ausgelegt ist, um die Strahlung zu bündeln oder zu fokussieren, der Applikator jedoch ein größervolumiges Bauteil ist, in dem die eine oder die mehreren Kammern als separate Volumina vorgesehen sind, sieht eine zweckmäßige Weiterbildung der Erfindung eine den jeweiligen Mikrowellenapplikator durchsetzende und durch die eine oder mehreren Kammern laufende, die Förderbänder und den Wurststrang aufnehmende Förderstrecke vor. Diese längliche Förderstrecke dient folglich der Band- und damit auch der Strangführung zu und von der oder den Kammern, die dann in ihrer Geometrie entsprechend optimiert ausgelegt werden können.

Eine besonders vorteilhafte Weiterbildung sieht vor, die beiden Mikrowellenapplikatoren über ihre Länge oder lokal öffnen zu können. Dies ermöglicht es, die Förderbänder (ein solches Förderband kann sowohl ein umlaufendes, gewebeartiges Band sein, wie auch ein Band bestehend aus einer Vielzahl einzelner, gelenkig miteinander verbundener Glieder) ohne Weiteres in den Applikatoren anzuordnen respektive zu entnehmen, wenn dieser aus Reinigungsgründen erforderlich ist. Hierzu ist es lediglich erforderlich, den jeweiligen Applikator zu öffnen, sodass die Förderbänder, die mit jeweils einem Trum durch den Applikator laufen, eingesetzt respektive entnommen werden können. Zur Ermöglichung des Öffnens und Schließens ist ein Abschnitt des Mikrowellenapplikators entwedern schwenkbar oder linear bewegbar relativ zu einem anderen Teil des Applikators bzw. des Vorrichtungsgestells angeordnet. Zweckmäßigerweise besteht hierzu ein Mikrowellenapplikator aus zwei Gehäusehälften, wobei die erste Gehäusehälfte lagefest ist und die zweite Gehäusehälfte entweder an der ersten Gehäusehälfte oder an einem Vorrichtungsgestell schwenkgelagert ist, oder über Linearführungselemente an der ersten Gehäusehälfte oder dem Vorrichtungsgestell gelagert ist. Jeder Applikator ist folglich über seine Länge geteilt, sodass er vollständig geöffnet und geschlossen werden kann. Die Bewegung der zweiten Gehäusehälfte, insbesondere zum Linearverschieben über die Linearführungselemente, erfolgt zweckmäßigerweise mittels eines Stellmotors, beispielsweise Servomotors. Um sicherzustellen, dass ein zuvor geöffneter Applikator auch vollständig wieder geschlossen ist, ist zweckmäßigerweise ein Positionssensor vorgesehen, der letztlich den Schließzustand überwacht und der den Folgebetrieb nur dann zulässt, wenn das vollständige Schließen sensiert wird, d. h., dass der Betrieb der Vorrichtung folglich in Abhängigkeit dieser Sensorerfassung steuerbar ist. Denn nur dann, wenn jeder Applikator vollständig geschlossen ist, ist auch eine erforderliche Strahlungsbehandlung möglich.

Wie bereits beschrieben ist in jedem Applikator wenigstens eine, vorzugsweise jedoch wenigstens zwei kaskadiert hintereinander angeordnete Kammern wie auch eine entsprechende Förderstrecke ausgebildet. Um dies zu ermöglichen besteht jede Gehäusehälfte aus einem Vollmaterial, wobei in wenigstens eine Gehäusehälfte eine die Förderstrecke und eine eine Kammer bildende Ausnehmung eingebracht ist. Die Gehäusehälften sind also Vollmaterialbauteile vorzugsweise aus Edelstahl oder Aluminium, mithin also aus Metall, was eine sehr einfache Reinigbarkeit mit sich bringt. Die entsprechenden Ausnehmungen, die an wenigstens einer Gehäusehälfte vorgesehen sind und die Förderstrecke respektive mindestens eine der Kammern bilden, können durch Einfräsen oder dergleichen in dieses Vollmaterialteil eingebracht werden. Dabei kann diese Ausnehmungsgeomtrie nur in eine Gehäusehälfte eingebracht werden, während die andere Gehäusehälfte quasi ebenflächig ist und nur zum Verschließen der am anderen Teil eingebrachten Ausnehmungen dient. Denkbar ist es aber auch, in jede Gehäusehälfte quasi eine "halbe" Ausnehmung einzubringen, sodass sich die Ausnehmungshälften im Schließzustand zur Förderstrecke respektive Kammer ergänzen.

In Weiterbildung der Erfindung kann jedem Mikrowellenapplikator ein Sensor zur Erfassung des Ein- und Auslaufs eines Wurststrangs vorgeschaltet sein, wobei der Betrieb der dem Mikrowellenapplikator zugeordneten wenigstens einen Mikrowellenerzeugungseinrichtung in Abhängigkeit der Sensorerfassung steuerbar ist. Der jeweilige Sensor erfasst also den Stranganfang und das Strangende, wobei die jeweilige Strahlungserzeugung nur dann zugeschaltet wird, wenn tatsächlich ein Wurststrang einläuft und die Strahlungserzeugung erforderlich ist. Wird das Strangende erfasst, so schaltet die jeweilige Strahlungserzeugung aus. D. h., dass über dieses Sensorsignal folglich der Ein-Aus-Betrieb der Mikrowellenerzeugungseinrichtungen (Magnetron) gesteuert wird.

Weiterhin kann dem zweiten Mikrowellenapplikator ein Sensor vorgeschaltet sein, mittels dem das Vorhandensein einer Abdrehung zwischen zwei bereits im ersten Mikrowellenapplikator behandelten Würsten erfassbar ist, wobei der Betrieb der dem zweiten Mikrowellenapplikator zugeordneten wenigstens einen Mikrowellenerzeugungseinrichtung und/oder seiner zugeordneten Transporteinrichtung in Abhängigkeit der Sensorerfassung steuerbar ist. Stellt sich also während der Behandlung eines Wurststrangs, der in der Regel eine Vielzahl von Würsten umfasst, heraus, dass im einen oder anderen Fall eine Abdrehung nach der ersten Strahlungsbehandlung noch nicht gänzlich getrennt ist, so kann dies über den Sensor erfasst werden, woraufhin beispielsweise die Strahlungsleistung der zweiten Mikrowellenerzeugungseinrichtung(en) kurzzeitig erhöht wird, um im Rahmen der zweiten Strahlungsbehandlung noch mehr Energie einzubringen und die vollständige Versprödung und den Bruch herbeizuführen, und/oder die Transportgeschwindigkeit der zweiten Transporteinrichtung etwas vergrößert werden, um die Zugspannung innerhalb der teilweise schon versprödeten Abdrehung zu erhöhen respektive gegebenenfalls hierdurch bereits den Bruch wieder zu erwirken. Als ein hier dienlicher Sensor kann aber auch der Sensor, der den Einlauf-Auslauf eines Wurststrangs sensiert, verwendet werden.

Wie ausgeführt ist jedem Applikator eine eigene Transporteinrichtung umfassend zwei übereinander angeordnete Förderbänder zugeordnet. Diese über Rollen geführten Förderbänder laufen erfindungsgemäß mit einem Trum durch den jeweiligen Mikrowellenapplikator, mit dem jeweils anderen Trum sind sie außenseitig um den Applikator geführt. Dabei kann zumindest ein Teil der Rollen positionsverstellbar sein, um den Abstand der beiden durch den Mikrowellenapplikator verlaufenden Trümmer zu variieren und so eine Einstellung des Bandabstands zur Anpassung an ein sich änderndes Wurstkaliber vorzunehmen. Denkbar ist aber auch, diese Positionsveränderung durch Austausch der Förderbänder, die dann unterschiedlich dick sind, vorzunehmen. Werden dickere Förderbänder eingesetzt, so nimmt der Bandabstand im Vergleich zu dünneren Bändern zwangsläufig ab, und umgekehrt. Als Förderbänder können beispielsweise beschichtete Gewebebänder oder modifizierte Kunststoffgliederbänder oder Ähnliches verwendet werden, sie sind jedoch in jedem Fall aus einem für Mikrowellenstrahlung transparenten Material. Dabei bedeutet der Begriff "strahlungstransparent", dass das Material eine äußerst geringe Strahlungsabsorption aufweist, die in einer quasi vernachlässigbaren Größenordnung liegt. Als ein solches Bandmaterial kann beispielsweise Polytetrafluorethylen (PTFE), Polypropylen (PP), Polyethylen (PE) oder ein Silikon verwendet werden.

Weitere Vorteile, Merkmale und Einzelheiten der Erfindung ergeben sich aus dem im Folgenden genannten Ausführungsbeispiel sowie anhand der Zeichnung. Dabei zeigen:
- Fig. 1: eine Perspektivansicht einer erfindungsgemäßen Vorrichtung,
- Fig. 2: eine Prinzipdarstellung zur Erläuterung der individuellen Ansteuerung betriebsrelevanter Komponenten der Vorrichtung aus Fig. 1,
- Fig. 3: eine vergrößerte Detailansicht der Vorrichtung aus Fig. 1 im Bereich der beiden Mirkowellenapplikatoren im geschlossenen Zustand,
- Fig. 4: eine Ansicht entsprechend Fig. 3 mit den beiden geöffneten Mikrowellenapplikatoren,
- Fig. 5: eine Frontalansicht der Vorrichtung mit Blick auf die beiden geöffneten Mikrowellenapplikatoren, wobei die jeweilige vordere Gehäusehälfte nicht gezeigt ist, und
- Fig. 6: eine Querschnittsansicht durch die Vorrichtung zur Darstellung der Anordnung einer Mikrowellenerzeugungseinrichtung.

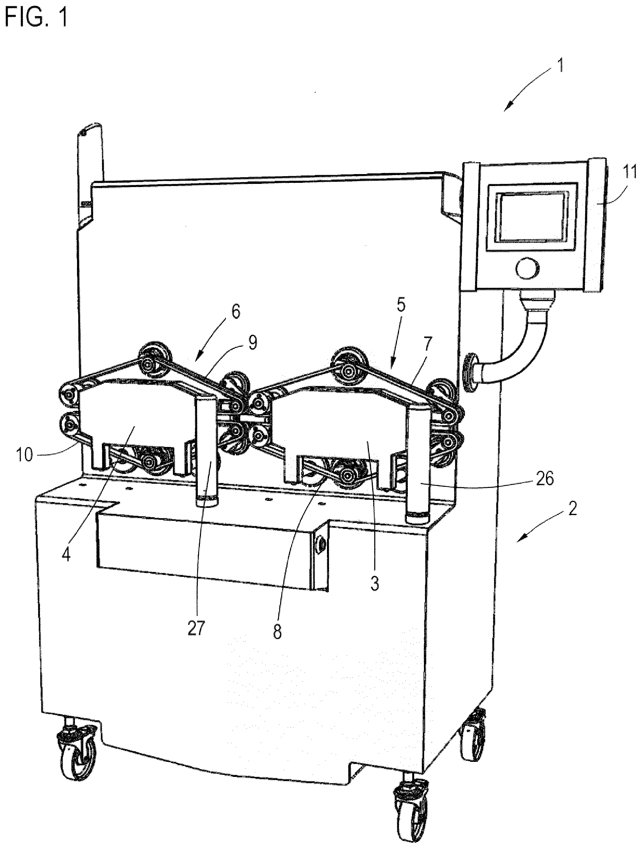

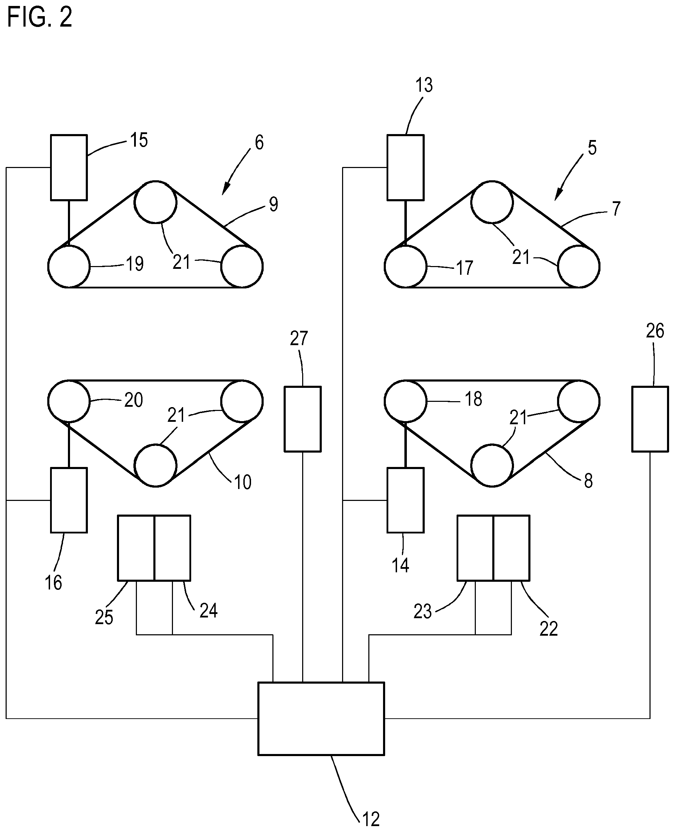

Fig. 1 zeigt eine erfindungsgemäße Vorrichtung 1 zum Behandeln eines Wurststrangs, umfassend ein hier nicht im Detail gezeigtes Vorrichtungsgestell 2, sowie zwei im Bezug auf die Strangtransportrichtung hintereinander angeordnete Mikrowellenapplikatoren 3, 4 mit jeweils einer zugeordneten Transporteinrichtung 5, 6 umfassend jeweils zwei Förderbänder 7, 8 bzw. 9, 10, mittels denen ein Wurststrang durch die beiden Mikrowellenapplikatoren 3, 4 gefördert werden kann. Der Wurststrang wird dabei im Bereich der mittigen Schnittstelle von der Transporteinrichtung 5 auf die Transporteinrichtung 6 übergeben. In jedem Mikrowellenapplikator 3, 4 wird der hindurchtransportierte Wurststrang mit Mikrowellenstrahlung behandelt, die über in Fig. 1 nicht gezeigte Mikrowellenerzeugungseinrichtung (Magnetrons) erzeugt wird. Jedem Applikator 3, 4 ist mindestens eine Mikrowellenerzeugungseinrichtung zugeordnet, worauf nachfolgend noch eingegangen wird. Über die Bedieneinrichtung 11 wird der Betrieb der Vorrichtung 1 zentral gesteuert, die Steuerung erfolgt mittels einer zentralen Steuerungseinrichtung 12, siehe Fig. 2, in der eine Prinzipdarstellung der Steuerungsvernetzung gezeigt ist.

In Fig. 2 sind zum einen die beiden Transporteinrichtungen 5, 6 mit den jeweiligen Förderbändern 7 - 10 gezeigt, wobei jedem Förderband 7 - 10 ein Antriebsmotor 13, 14, 15, 16 zugeordnet ist, über den eine Antriebsrolle 17, 18, 19, 20 angetrieben wird, während das Band über weitere Umlenkrollen 21 geführt ist. Ersichtlich kommuniziert die Steuerungseinrichtung 12 mit jedem Antriebsmotor 13 - 16 (vorzugsweise Synchronmotoren), sodass dieser individuell angesteuert werden kann. Die Konfiguration ist dabei derart, dass die beiden Antriebsmotoren 13, 14 synchron angesteuert werden, wie auch die beiden Antriebsmotoren 15, 16, sodass ein absolut gleicher synchroner Lauf gegeben ist. Denn die Fördebänder 7 und 8 sollen gleich schnell laufen, wie auch die beiden Förderbänder 9, 10. Dabei ist die Ansteuerung derart, dass die beiden Förderbänder 9, 10 im Regelfall etwas schneller laufen als die beiden Förderbänder 7, 8, sodass sich im Bereich der Schnittstelle, also die Übergabe von der Transporteinrichtung 5 auf die Transporteinrichtung 6, eine Längung und damit ein Zug innerhalb der jeweiligen Abdrehung des Wurststrangs ergibt, der förderlich für das Auftrennen der jeweiligen Abdrehung ist. Die Grundgeschwindigkeiten wie auch die Geschwindigkeitsdifferenz kann in Folge der separaten Einstellung der jeweiligen Transportgeschwindigkeiten der Transporteinrichtungen 5 und 6 individuell und nach Bedarf eingestellt werden.

Gezeigt sind ferner im gezeigten Ausführungsbeispiel insgesamt vier Mikrowellenerzeugungseinrichtungen 22, 23, 24, 25 (Magnetrons) die ebenfalls über die Steuerungseinrichtung 12 angesteuert werden. Im gezeigten Beispiel sind vier derartige Einrichtungen vorgesehen, wobei die beiden Strahlungserzeugungseinrichtungen 22, 23 dem Applikator 3 und die beiden Strahlungserzeugungseinrichtungen 24, 25 dem Applikator 4 zugeordnet sind und jeweils eine Kammer mit Strahlung speisen, worauf nachfolgend noch eingegangen wird. Grundsätzlich wäre es aber denkbar, pro Mikrowellenapplikator 3, 4 auch nur eine Mikrowellenerzeugungseinrichtung vorzusehen.

In jedem Fall besteht auch hier die Möglichkeit, die Mikrowellenerzeugungseinrichtungen individuell anzusteuern, entweder paarweise unterschiedlich, also die Mikrowellenerzeugungseinrichtungen 22 und 23 synchron, jedoch individuell und unterschiedlich zu den synchron angesteuerten Erzeugungseinrichtungen 24, 25, oder jede Erzeugungseinrichtung 22 - 25 komplett separat und individuell zu betreiben. Dies bietet die Möglichkeit, auch innerhalb der erzeugten Strahlungsleistung eine Variation zwischen der applizierbaren Strahlungsleistung im Applikator 3 zu der im Applikator 4 applizierten Leistung zu erzeugen. Beispielsweise kann die Strahlungsleistung im Applikator 3 höher als im Applikator 4 sein, oder umgekehrt, sie kann je nach Bedarf auch gleich ausgelegt werden. In jedem Fall besteht grundsätzlich die Möglichkeit, wie auch bei der Transportgeschwindigkeit, in Folge der separaten Ansteuerbarkeit einen beliebigen Betrieb zu realisieren.

Vorgesehen sind ferner zwei Sensoren 26, 27, wobei der Sensor 26 dem ersten Applikator 3 und der Sensor 27 dem zweiten Applikator 4 vorgeschaltet ist. Die beiden Sensoren 26, 27 dienen der Erfassung des einlaufenden Stranganfangs wie auch der Erfassung des auslaufenden Strangendes. In Abhängigkeit dieses Sensorsignals steuert die Steuerungseinrichtung 12 sodann den Betrieb der Mikrowellenerzeugungseinrichtung 22 - 25 derart, dass bei Erfassung des Einlaufs eines neuen Strangs der Strahlungserzeugungsbetrieb beginnt, also jeweils die jeweiligen Magnetrons eingeschaltet werden, und bei Erfassung eines Strangendes nach Durchlauf des kompletten Strangs der Strahlungserzeugungsbetrieb ausgeschaltet wird. Entsprechendes kann auch, zumindest was das Ausschalten angeht in Bezug auf den Antrieb der Transporteinrichtungen 5, 6 erfolgen.

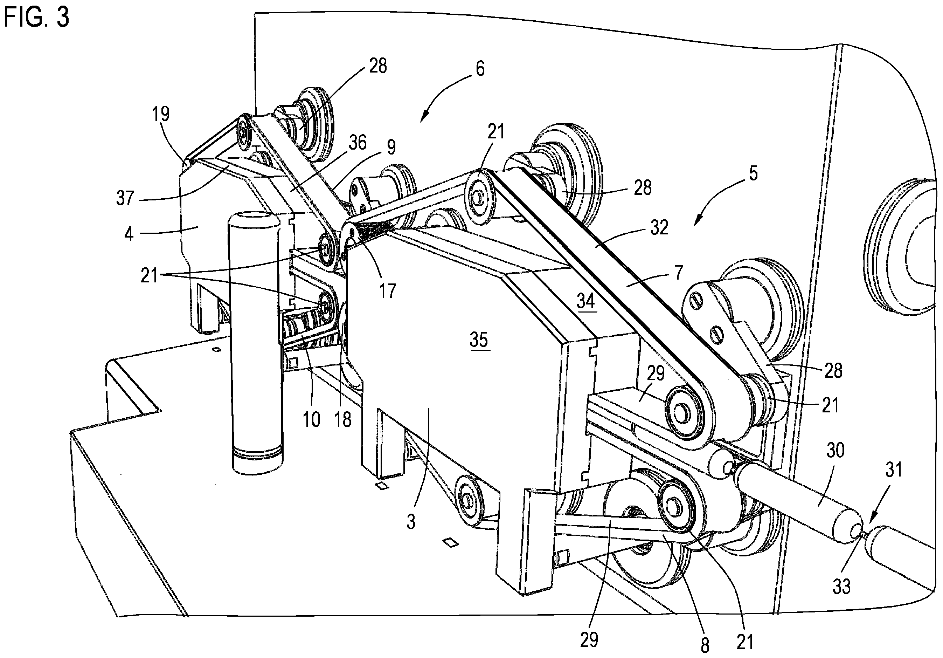

Fig. 3 zeigt in einer vergrößerten Darstellung die beiden Mikrowellenapplikatoren 3, 4 sowie die zugeordneten Transporteinrichtungen 5, 6 in Form der Bänder 7, 8 und 9, 10, wobei die Bänder entweder beschichtete Gewebebänder oder Gliederbänder oder Ähnliches sind, in jedem Fall aber aus einem Material, das strahlentransparent ist, bestehen. Gezeigt sind, soweit möglich, die Antriebsrollen 17, 18 und 19, wie auch zum Teil die Umlenkrollen 21, über die die Förderbänder geführt sind. Die Umlenkrollen 21 sind an entsprechenden Hebeln 28 angeordnet, die verschwenkt werden können, um auf diese Weise die Spannung der einzelnen Förderbänder 7 - 10 einzustellen, wie gegebenenfalls auch einer dieser Hebel 28 federbelastet sein kann, sodass er kontinuierlich eine bestimmte Bandspannung aufrecht hält. Die Förderbänder weisen jeweils eine eben Innenfläche 29 auf, an ihrer an den einzelnen Würsten 30 des hier gezeigten Wurststrangs 31 angreifenden Außenseite 32 sind sie, der Wurstform etwas angepasst, rundlich ausgeführt, um die Würste definiert zu führen. Wie Fig. 3 zeigt, sind jeweils zwei hintereinander folgende Würste über eine Abdrehung 33 miteinander verbunden, die es in der Vorrichtung 1 zu trennen gilt.

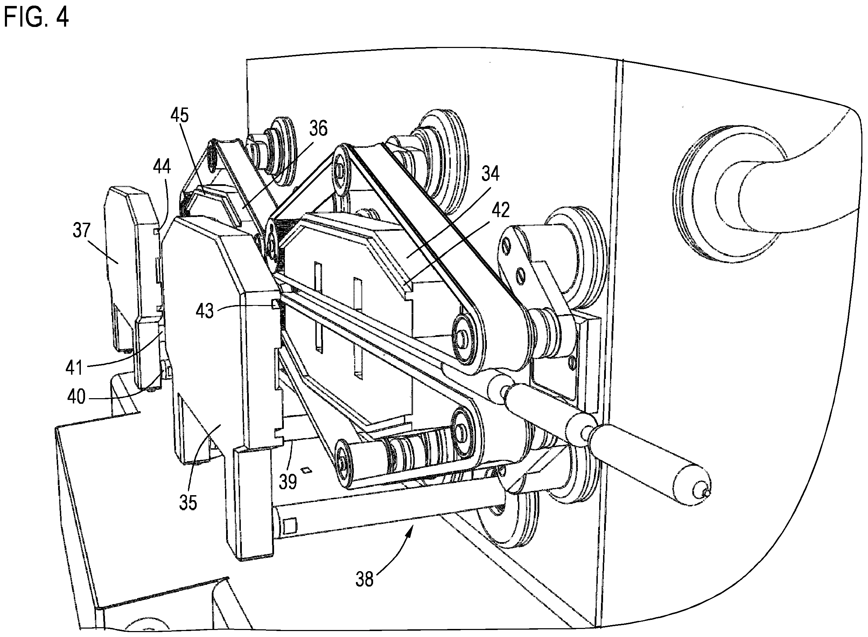

Jeder Mikrowellenapplikator 3, 4 besteht, siehe die Fig. 3 und 4, aus zwei Gehäusehälften 34, 35 bzw. 36, 37. Die jeweiligen Gehäusehälften 34, 36 sind dabei gestellfest, also unbeweglich, während die vorderen Gehäusehälften 35, 37 beweglich sind, um den jeweiligen Applikator 3, 4 öffnen zu können. Zur Bewegungslagerung sind diese Gehäusehälften 35, 37 über jeweils zwei Linearführungen 38, 39 bzw. 40 , 41 linear verschiebbar, sie können also über einen hier nicht näher gezeigten Stellmotor zwischen der in Fig. 3 gezeigten Schließposition und der in Fig. 4 gezeigten geöffneten Position verschoben werden. Hierüber ist es möglich, in das Innere jedes Applikators zu gelangen, um diesen zu reinigen oder Förderbänder zu tauschen etc. Die Linearführungen 38 - 41 sind über entsprechend Stangen realisiert, die das Vorrichtungsgestell in entsprechenden Führungen durchgreifen respektive dortseits in entsprechenden Führungsbuchsen und Ähnlichem gelagert sind.

Wie aus den Fig. 3, 4 ersichtlich, weisen die Gehäusehälften 34 - 37 entsprechende Eingriffskonturen 42, 43 bzw. 44, 45 in Form von umfänglichen Randnuten respektive Vorsprüngen auf, die beim Zusammenfahren ineinander greifen. Über einen hier nicht näher gezeigten Positionssensor, der auch im Bereich der jeweiligen Linearführungen angeordnet sein kann, wird ein korrektes Schließen erfasst.

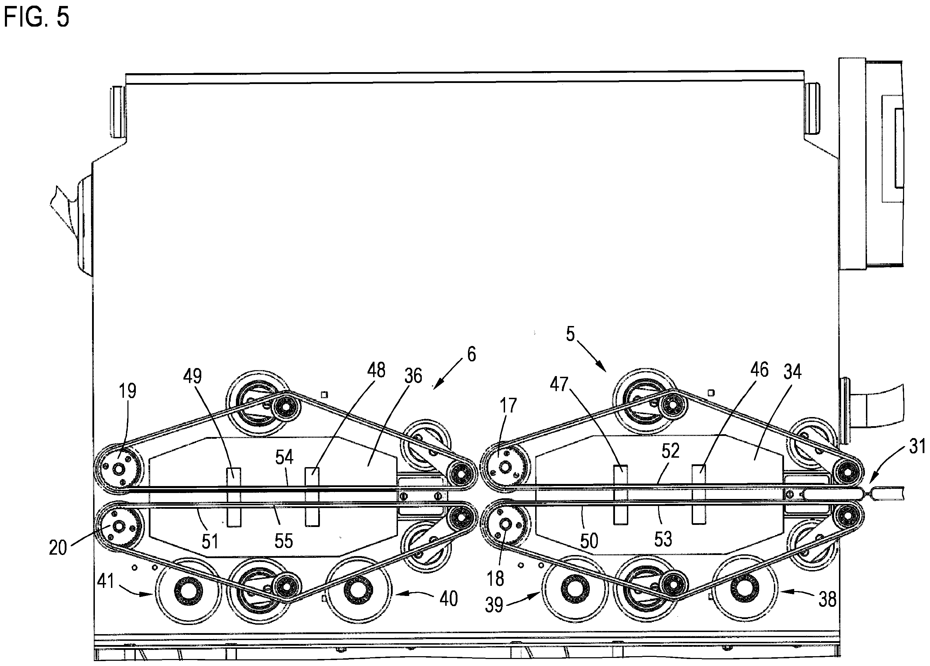

Wie insbesondere die Frontalansicht gemäß Fig. 5, in der nur die gestellfesten Gehäusehälften 34, 36 gezeigt sind, während die beweglichen Gehäusehälften 35, 37 entfernt sind, zeigt, weist jeder Mikrowellenapplikator 3, 4 zwei separate Kammern 46, 47 bzw. 48, 49 auf, denen jeweils Mikrowellenstrahlung zugeführt wird. Diese Mirkowellenstrahlung kann über jeweils eine kammereigene Mikrowellenerzeugungseinrichtung, also ein eigenes Magnetron erzeugt werden, weshalb, siehe Fig. 2, bei dem dort geschilderten Ausführungsbeispiel auch vier solcher Erzeugungseinrichtungen 22 - 25 vorgesehen sind. Das Magnetron 22 würde also die Strahlung für die Kammer 46, das Magnetron 23 die Strahlung für die Kammer 47, das Magnetron 24 die Strahlung für die Kammer 48 und das Magnetron 25 die Strahlung für die Kammer 49 erzeugen. Denkbar wäre es aber natürlich auch, jedes Kammerpaar 46/47 bzw. 48/49 über eine gemeinsame Strahlungserzeugungseinrichtung mit Strahlung zu versorgen. Da wie beschrieben die Strahlungserzeugungseinrichtungen 22, 23 synchron oder individuell wie auch die Strahlungserzeugungseinrichtungen 24, 25 synchron oder individuell in ihrer erzeugbaren Strahlungsleistung über die Steuerungseinrichtung 12 einstellbar sind, ist es folglich möglich, über die hier gezeigten vier kaskadiert hintereinander angeordneten Kammern 46 - 49 quasi ein beliebiges Strahlungsleistungsprofil einzustellen. Bevorzugt wird der Betrieb derart, dass die beiden Strahlungserzeugungseinrichtungen 22, 23 eine gleiche Strahlungsleistung erzeugen, wie auch die beiden Strahlungserzeugungseinrichtungen 24, 25, die jedoch von der Leistung der beiden anderen Einrichtungen unterschiedlich sein kann.

Die Kammern 46 - 49 sind als Ausnehmungen in den Gehäusehälften 34, 36 (die vorzugsweise aus Edelstahl oder Aluminium, also aus Metall sind) eingebracht, während die anderen Gehäusehälften 35, 37 plan sind. Um die Förderbänder durch die Kammern 46 - 49 führen zu können ist des Weiteren eine horizontale, längsdurchlaufende Förderstrecke 50, 51 an jeder Gehäusehälfte 34, 36 realisiert, durch die jedes Förderband 7 - 10 mit jeweils einem Trum 52, 53 bzw. 54, 55 läuft. D. h., jede Förderstrecke 50, 51 nimmt folglich die beiden Trümmer wie auch den geförderten Wurststrang 31 auf. Die Förderstrecken 50, 51 erstrecken sich folglich durch die Kammern 46 - 49, sodass der Wurststrang durch die Kammern geführt wird. In jeder Kammer 46 - 49 wird der Wurststrang mit der über die Magnetrone 22 - 25 erzeugten Mikrowellenstrahlung behandelt. Hierbei kommt es, nachdem der Wurststrang eine Hülle aus einem organischen Material aufweist, zu Koagulations- oder Vernetzungsprozessen im Hüllmaterial und insbesondere im Bereich der Abdrehungen 33, die hierbei verspröden, da hier der Energieeintrag und damit die Erwärmung am stärksten ist, da ein Abtransport respektive eine Dissipation in das Wurstbrät im Bereich der Abdrehungen 33 gerade nicht möglich ist. In Folge des Strahlungseintrags respektive der Erwärmung setzt also eine Versprödung ein, die zumindest nach Behandlung in der letzten Kammer 49 sicherstellt, dass jede Abdrehung 33 aufgebrochen ist, mithin also die einzelnen Würste 30 den Applikator 4 vereinzelt verlassen. Die beiden Transporteinrichtungen 5, 6 laufen wir ausgeführt mit unterschiedlicher Geschwindigkeit, die Transporteinrichtung 6 läuft etwas schneller, sodass sich im Bereich der Übergabestellte von der Transporteinrichtung 5 auf die Transporteinrichtung 6 ein leichter Zug innerhalb der einzelnen Abdrehung 33 ergibt, der in Verbindung mit der Versprödung die vollständige Auftrennung erwirkt.

Sollte aus irgendwelchen Gründen trotz im gezeigten Beispiel vierfacher Bestrahlung der Abdrehungen im Einzelfall eine Abdrehung nicht getrennt werden, so besteht in Folge der individuellen Ansteuerbarkeit der Strahlungserzeugungseinrichtungen 22 - 25 respektive der jeweiligen Paare 22/23 bzw. 24/25 die Möglichkeit, hier unmittelbar nachregeln zu können. Beispielsweise ist es denkbar, die beiden Einrichtungen 24, 25 in der Strahlungsleistung anzuheben, sodass im Rahmen der Bestrahlung in den Kammern 48, 49 in einem solchen Fall etwas mehr Energie eingebracht wird, mithin also die Erwärmung noch stärker erfolgt, um, in Verbindung mit der erzeugten Zugspannung innerhalb der Abdrehung, das Aufbrechen sicherzustellen. Denkbar ist es aber auch, sämtliche Strahlungserzeugungseinrichtungen anzuheben, oder nur die beiden dem ersten Applikator 3 zugeordneten Einrichtungen 22, 23, je nach Bedarf respektive Ausgangssituation. Grundsätzlich ist es auch denkbar, über eine Geschwindigkeitsvariation einzugreifen, mithin also beispielsweise die zweite Transporteinrichtung 6 noch etwas schneller laufen zu lassen oder die erste Transporteinrichtung 5 etwas abzubremsen, sodass sich die Zugspannung innerhalb der jeweiligen Abdrehung erhöht, wie auch beide in der Geschwindigkeit reduziert werden können, um etwas langsamer zu fördern und die Verweildauer der Abdrehungen innerhalb der Kammern 46 - 49 etwas zu verlängern. Es sind also beliebige Variationsmöglichkeiten gegeben, und sich so genau und erforderlich wie möglich auf die gegebenen Umstände einzustellen, um eine sichere Vereinzelung am Auslauf zu ermöglichen. Das Erfassen, ob nach Auslauf aus dem ersten Applikator 3 bereits eine Abtrennung erfolgt ist, kann wie ausgeführt über den Sensor 27 erfolgen, der mit der Steuerungseinrichtung 12 kommuniziert. Erfasst dieser, das über einen definierten Zeitraum erfasste Abdrehungen allesamt noch geschlossen sind, so kann eine entsprechende Variation einsetzen. Denkbar ist natürlich auch eine Steuerung in der Form, dass bei Erfassung einer stets gegebenen Trennung bereits nach Durchlauf durch den ersten Applikator die dort applizierte Strahlungsleistung etwas zurückgenommen wird, um die Trennung dann erst über den zweiten Applikator 4 sicherzustellen.

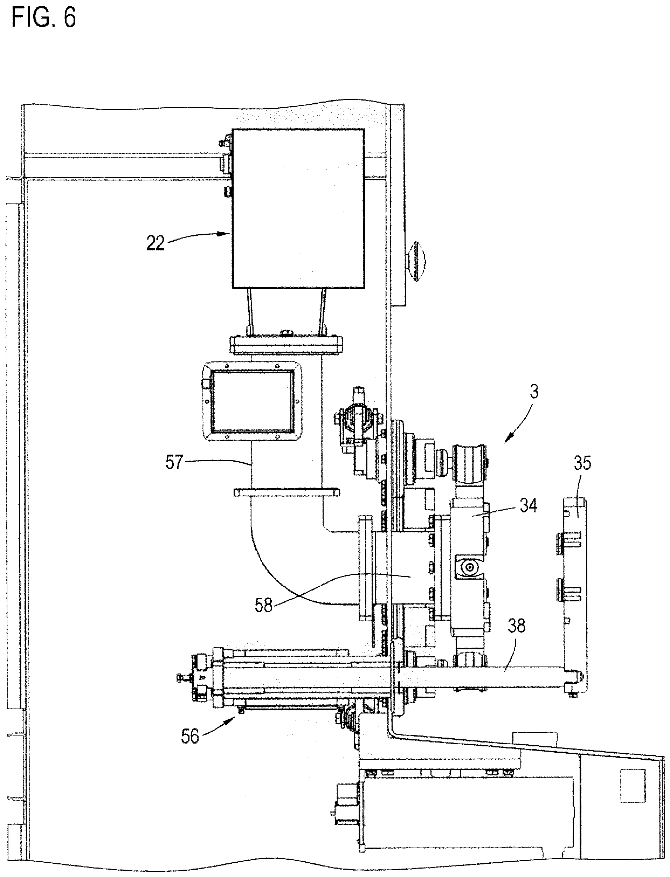

Fig. 6 zeigt schließlich eine Schnittansicht durch die Vorrichtung 1 aus Fig. 1 hier im Bereich des Applikators 3, der hier geöffnet gezeigt ist, d. h., dass über die beiden Linearführungen 38, 39 in Verbindung mit dem hier gezeigten Stellmotor 56 die Gehäusehälfte 35 die ersichtlich keine Ausnehmungen aufweist, sondern lediglich die die jeweiligen Kammern respektive Förderstrecken bildenden Ausnehmungen schließt, in die geöffnete Position gefahren ist.

Gezeigt ist exemplarisch die Mikrowellenerzeugungseinrichtung 22, die hier im oberen Bereich des Vorrichtungsgestells angeordnet ist. Über ein Strahlungsrohr 57, ein Metallrohr, wird die erzeugte Strahlung zum Mikrowellenapplikator 3 geführt und dort über ein entsprechendes, gegebenenfalls geometrisch der Kammerform angepasstes Adapterstück 58 mit der Rückseite der Gehäusehälfte 34 gekoppelt. Die Gehäusehälfte 34 ist im Bereich der Kammern 46, 47 (gleiches gilt natürlich für die Gehäuse 36 des anderen Applikators) natürlich offen, damit die zugeführte Strahlung in die Kammer eintreten kann.

Sofern pro Applikator nur eine Strahlungserzeugungseinrichtung vorgesehen ist, speist diese beide Kammern 46, 47 respektive 48, 49. Die Rohrleitung 57 respektive insbesondere das Adapterstück 58 ist dann entsprechend ausgelegt, um die Strahlung zu beiden jeweiligen Kammern zu führen.

## Patentansprüche

1. Vorrichtung zum Behandeln eines Wurststrangs bestehend aus mehreren hintereinander angeordneten Würsten mit einer Wursthülle aus einem organischen Material, die im Bereich zwischen zwei Würsten eine Abdrehung aufweist, wobei wenigstens zwei Mikrowellenapplikatoren (3, 4) mit jeweils wenigstens einer zugeordneten Mikrowellenerzeugungseinrichtung (22, 23, 24, 25) zum Erzeugen von den Mikrowellenapplikatoren (3, 4) zuzuführender Mikrowellenstrahlung vorgesehen sind, wobei die Mikrowellenerzeugungseinrichtungen (22, 23, 24, 25) hinsichtlich der Leistung der erzeugten Mikrowellenstrahlung separat ansteuerbar sind, **dadurch gekennzeichnet, dass** den Mikrowellenapplikatoren (3, 4) jeweils eine separate Transporteinrichtung (5, 6) umfassend jeweils zwei übereinanderliegende umlaufende Förderbänder (7, 8, 9, 10) zum Transportieren des Wurststrangs (31) durch die Mikrowellenapplikatoren (3, 4) zugeordnet sind, wobei die Mikrowellenapplikatoren (3, 4) mit ihren zugeordneten Transporteinrichtungen (5, 6) hintereinander angeordnet sind, wobei die Transporteinrichtungen (5, 6) hinsichtlich der jeweiligen Transportgeschwindigkeit auch separat ansteuerbar sind.

2. Vorrichtung nach Anspruch 1, **dadurch gekennzeichnet, dass** jeder Mikrowellenapplikator (3, 4) wenigstens eine Kammer (46, 47, 48, 49) aufweist, durch die die jeweilige Transporteinrichtung (5, 6) läuft und der Wurststrang (31) transportiert wird, welcher Kammer (46, 47, 48, 49) die Mikrowellenstrahlung zuführbar ist.

3. Vorrichtung nach Anspruch 2, **dadurch gekennzeichnet, dass** an wenigstens einem Mikrowellenapplikator (3, 4) wenigstens zwei hintereinander angeordnete Kammern (46, 47, 48, 49) vorgesehen sind, durch die die jeweilige Transporteinrichtung (5, 6) läuft, und denen entweder simultan die mittels einer Mikrowellenerzeugungseinrichtung (22, 23, 24, 25) erzeugte Mikrowellenstrahlung zuführbar ist, oder denen jeweils eine eigene Mikrowellenerzeugungseinrichtung (22, 23, 24, 25) zugeordnet ist.

4. Vorrichtung nach Anspruch 2 oder 3, **dadurch gekennzeichnet, dass** eine den Mikrowellenapplikator (3, 4) durchsetzende und durch die eine oder mehreren Kammern (46, 47, 48, 49) laufende, die Förderbänder (7, 8, 9, 10) und den Wurststrang (31) aufnehmende Förderstrecke (50, 51) vorgesehen ist.

5. Vorrichtung nach einem der vorangehenden Ansprüche, **dadurch gekennzeichnet, dass** die beiden Mikrowellenapplikatoren (3, 4) über ihre Länge oder lokal öffenbar ist.

6. Vorrichtung nach Anspruch 5, **dadurch gekennzeichnet, dass** ein Abschnitt eines Mikrowellenapplikators (3, 4) aufschwenkbar oder linear bewegbar ist.

7. Vorrichtung nach Anspruch 6, **dadurch gekennzeichnet, dass** ein Mikrowellenapplikator (3, 4) aus zwei Gehäusehälften (34, 35, 36, 37) besteht, wobei die erste Gehäusehälfte (34, 36) lagefest ist und die zweite Gehäusehälfte (35, 37) entweder an der ersten Gehäusehälfte (34, 36) oder an einem Vorrichtungsgestell (2) schwenkgelagert ist, oder über Linearführungselemente (38, 39, 40, 41) an der ersten Gehäusehälfte (34, 36) oder am Vorrichtungsgestell (2) gelagert ist.

8. Vorrichtung nach Anspruch 7, **dadurch gekennzeichnet, dass** zum Bewegen der zweiten Gehäusehälfte (35, 37), insbesondere zum Verschieben über die Linearführungselemente (38, 39, 40, 41) ein Stellmotor (56) vorgesehen ist.

9. Vorrichtung nach einem der Ansprüche 5 bis 8, **dadurch gekennzeichnet, dass** jedem Mikrowellenapplikator (3, 4) wenigstens ein Sensor zum Erfassen des Schließzustands zugeordnet ist, wobei der Betrieb der Vorrichtung (1) in Abhängigkeit der Sensorerfassung steuerbar ist.

10. Vorrichtung nach einem der Ansprüche 7 bis 9, **dadurch gekennzeichnet, dass** jede Gehäusehälfte (34, 35, 36, 37) aus einem Vollmaterial bestehen, wobei in wenigstens eine Gehäusehälfte (34, 36) eine die Förderstrecke (50, 51) und eine eine Kammer (46, 47, 48, 49) bildenden Ausnehmung eingebracht ist.

11. Vorrichtung nach einem der vorangehenden Ansprüche, **dadurch gekennzeichnet, dass** jedem Mikrowellenapplikator (3, 4) ein Sensor (26, 27) zur Erfassung des Ein- und Auslaufs eines Wurststrangs (31) vorgeschaltet ist, wobei der Betrieb der dem Mikrowellenapplikator (3, 4) zugeordneten wenigstens einen Mikrowellenerzeugungseinrichtung (22, 23, 24, 25) in Abhängigkeit der Sensorerfassung steuerbar ist.

12. Vorrichtung nach einem der vorangehenden Ansprüche, **dadurch gekennzeichnet, dass** dem zweiten Mikrowellenapplikator (4) ein Sensor (27) vorgeschaltet ist, mittels dem das Vorhandensein einer Abdrehung (33) zwischen zwei bereits im ersten Mikrowellenapplikator (3) behandelten Würsten erfassbar ist, wobei der Betrieb der dem zweiten Mikrowellenapplikator (4) zugeordneten wenigstens einen Mikrowellenerzeugungseinrichtung (24, 25) und/oder der Transporteinrichtung (6) in Abhängigkeit der Sensorerfassung steuerbar ist.

13. Vorrichtung nach einem der vorangehenden Ansprüche, **dadurch gekennzeichnet, dass** die über Rollen (17, 18, 19, 20, 21) geführten Förderbänder (7, 8, 9, 10) mit einem Trum (52, 53, 54, 55) durch den jeweiligen Mikrowellenapplikator (3, 4) laufen und mit dem anderen Trum außenseitig um den Mikrowellenapplikator (3, 4) geführt sind.

14. Vorrichtung nach Anspruch 13, **dadurch gekennzeichnet, dass** zumindest ein Teil der Rollen (17, 18, 19, 20, 21) positionsverstellbar ist, um den Abstand der beiden durch den Mikrowellenapplikator (3, 4) laufenden Trümmer (52, 53, 54, 55) zu variieren.

## Claims

1. Device for treating a string of sausages consisting of a number of sausages arranged one behind the other, with a sausage casing of an organic material, which in the region between two sausages has a twist, wherein at least two microwave applicators (3, 4) each with at least one assigned microwave generating unit (22, 23, 24, 25) are provided for generating microwave radiation to be supplied to the microwave applicators (3, 4), wherein the microwave generating units (22, 23, 24, 25) can be separately activated with regard to the output of the microwave radiation generated, **characterized in that** the microwave applicators (3, 4) are respectively assigned a separate transporting unit (5, 6), in each case comprising two conveyor belts (7, 8, 9, 10), lying one over the other and running in a circulating manner, for transporting the string of sausages (31) through the microwave applicators (3, 4), wherein the microwave applicators (3, 4) with their assigned transporting units (5, 6) are arranged one behind the other, wherein the transporting units (5, 6) can also be activated separately with regard to the respective transporting speed.

2. Device according to Claim 1, **characterized in that** each microwave applicator (3, 4) has at least one chamber (46, 47, 48, 49), through which the respective transporting unit (5, 6) runs and the string of sausages (31) is transported, to which chamber (46, 47, 48, 49) the microwave radiation can be supplied.

3. Device according to Claim 2, **characterized in that** at least two chambers (46, 47, 48, 49), which are arranged one behind the other, through which the respective transporting unit (5, 6) runs and which either can be supplied simultaneously with the microwave radiation generated by means of one microwave generating unit (22, 23, 24, 25) or are respectively assigned a microwave generating unit (22, 23, 24, 25) of their own, are provided on at least one microwave applicator (3, 4).

4. Device according to Claim 2 or 3, **characterized in that** a conveying section (50, 51), which passes through the microwave applicator (3, 4), runs through the one or more chambers (46, 47, 48, 49) and receives the conveyor belts (7, 8, 9, 10) and the string of sausages (31), is provided.

5. Device according to one of the preceding claims, **characterized in that** the two microwave applicators (3, 4) can be opened over their length or locally.

6. Device according to Claim 5, **characterized in that** a portion of a microwave applicator (3, 4) can be swung up or can be moved linearly.

7. Device according to Claim 6, **characterized in that** a microwave applicator (3, 4) consists of two housing halves (34, 35, 36, 37), wherein the first housing half (34, 36) is fixed in position and the second housing half (35, 37) is either pivotably mounted on the first housing half (34, 36) or on a device frame (2) or is mounted on the first housing half (34, 36) or on the device frame (2) by way of linear guiding elements (38, 39, 40, 41).

8. Device according to Claim 7, **characterized in that** a servomotor (56) is provided for moving the second housing half (35, 37), in particular for displacement over the linear guiding elements (38, 39, 40, 41).

9. Device according to one of Claims 5 to 8, **characterized in that** each microwave applicator (3, 4) is assigned at least one sensor for detecting the closed state, the operation of the device (1) being controllable in dependence on the sensor detection.

10. Device according to one of Claims 7 to 9, **characterized in that** each housing half (34, 35, 36, 37) consists of a solid material, wherein at least one housing half (34, 36) incorporates a recess forming the conveying section (50, 51) and a recess forming a chamber (46, 47, 48, 49).

11. Device according to one of the preceding claims, **characterized in that** each microwave applicator (3, 4) is preceded by a sensor (26, 27) for detecting the running in and running out of a string of sausages (31), wherein the operation of the at least one microwave generating unit (22, 23, 24, 25) assigned to the microwave applicator (3, 4) is controllable in dependence on the sensor detection.

12. Device according to one of the preceding claims, **characterized in that** the second microwave applicator (4) is preceded by a sensor (27), by means of which the presence of a twist (33) between two sausages already treated in the first microwave applicator (3) can be detected, wherein the operation of the at least one microwave generating unit (24, 25) and/or the transporting unit (6) assigned to the second microwave applicator (4) is controllable in dependence on the sensor detection.

13. Device according to one of the preceding claims, **characterized in that** the conveyor belts (7, 8, 9, 10), guided over rollers (17, 18, 19, 20, 21), run with one strand (52, 53, 54, 55) through the respective microwave applicator (3, 4) and are led with the other strand on the outside around the microwave applicator (3, 4).

14. Device according to Claim 13, **characterized in that** at least some of the rollers (17, 18, 19, 20, 21) are adjustable in position, in order to vary the distance between the two strands (52, 53, 54, 55) running through the microwave applicator (3, 4).

## Revendications

1. Ensemble pour traiter une chaîne de saucisses constituée de plusieurs saucisses disposées les unes derrière les autres et dotées d'une enveloppe de saucisse en matériau organique qui présente une torsion entre deux saucisses,
au moins deux applicateurs (3, 4) de microondes à chacun desquels est associé au moins un dispositif (22, 23, 24, 25) de production de microondes étant prévus pour former un rayonnement de microondes amené aux applicateurs (3, 4) de microondes,
la puissance des rayonnements de microondes formés par les dispositifs (22, 23, 24, 25) de formation de microondes pouvant être commandée séparément, **caractérisé en ce que**
un dispositif de transport (5, 6) qui comprend deux bandes transporteuses (7, 8, 9, 10) circulant l'une au-dessus de l'autre en boucle fermée pour transporter la chaîne (31) de saucisses à travers les applicateurs (3, 4) de microondes est associé à chacun des applicateurs (3, 4) de microondes,
**en ce que** les applicateurs (3, 4) de microondes avec leurs dispositifs de transport (5, 6) associés sont disposés l'un derrière l'autre et
**en ce que** la vitesse de transport de chacun des dispositifs de transport (5, 6) peut également être commandée séparément pour chacun d'entre eux.

2. Ensemble selon la revendication 1, **caractérisé en ce que** chaque applicateur (3, 4) de microondes présente au moins une chambre (46, 47, 48, 49) dans laquelle se déplace le dispositif de transport (5, 6) et dans laquelle la chaîne (31) de saucisses est transportée, le rayonnement de microondes pouvant être amené à ces chambres (46, 47, 48, 49).

3. Ensemble selon la revendication 2, **caractérisé en ce qu'**au moins deux chambres (46, 47, 48, 49) sont prévues l'une à la suite de l'autre sur au moins un applicateur (3, 4) de microondes et sont traversées par un dispositif de transport associé (5, 6), **en ce que** le rayonnement de microondes formé au moyen d'un dispositif (22, 23, 24, 25) de production de microondes peut être amené simultanément à ces chambres ou **en ce qu'**un dispositif propre (22, 23, 24, 25) de formation de microondes est associé à chacune de ces chambres.

4. Ensemble selon les revendications 2 ou 3, **caractérisé en ce qu'**il présente un parcours de transport (50, 51) qui traverse l'applicateur (3, 4) de microondes, qui s'étend dans la ou les chambres (46, 47, 48, 49) et qui reprend les bandes transporteuses (7, 8, 9, 10) et la chaîne (31) de saucisses.

5. Ensemble selon l'une des revendications précédentes, **caractérisé en ce que** les deux applicateurs (3, 4) de microondes peuvent être ouverts sur toute leur longueur ou localement.

6. Ensemble selon la revendication 5, **caractérisé en ce qu'**une partie de l'applicateur (3, 4) de microondes peut pivoter ou être déplacée linéairement.

7. Ensemble selon la revendication 6, **caractérisé en ce qu'**un applicateur (3, 4) de microondes est constitué de deux moitiés de boîtier (34, 35, 36, 37), la première moitié (34, 36) de boîtier étant immobile et la deuxième moitié (35, 37) de boîtier étant montée à pivotement sur la première moitié (34, 36) de boîtier ou sur un bâti (2) du dispositif, ou est montée par l'intermédiaire d'éléments (38, 39, 40, 41) de guidage linéaire sur la première moitié (34, 36) de boîtier ou sur le bâti (2) de l'ensemble.

8. Ensemble selon la revendication 7, **caractérisé en ce qu'**un moteur pas à pas (56) est prévu pour déplacer les deuxièmes moitiés de boîtier (35, 37) et en particulier pour les déplacer par l'intermédiaire des éléments (38, 39, 40, 41) de guidage linéaire.

9. Ensemble selon l'une des revendications 5 à 8, **caractérisé en ce qu'**au moins un capteur qui saisit l'état de fermeture est associé à chaque applicateur (3, 4) de microondes, le fonctionnement de l'ensemble (1) pouvant être commandé en fonction de la détection par le ou les capteurs.

10. Ensemble selon l'une des revendications 7 à 9, **caractérisé en ce que** chaque moitié de boîtier (34, 35, 36, 37) est constitué d'un matériau plein, une découpe qui forme le parcours de transport (50, 51) et une autre qui forme une chambre (46, 47, 48, 49) étant ménagée dans au moins une moitié (34, 36) du boîtier.

11. Ensemble selon l'une des revendications précédentes, **caractérisé en ce qu'**un capteur (26, 27) de détection de l'entrée et de la sortie d'une chaîne (31) de saucisses est raccordé en amont de chaque applicateur (3, 4) de microondes, le fonctionnement du ou des dispositifs (22, 23, 24, 25) de formation de microondes associés à l'applicateur (3, 4) de microondes pouvant être commandé en fonction de la détection par le capteur.

12. Ensemble selon l'une des revendications précédentes, **caractérisé en ce qu'**un capteur (27) au moyen duquel la présence d'une torsion (33) entre deux saucisses qui ont déjà été traitées dans le premier applicateur (3) de microondes peut être détectée est raccordé en amont du deuxième applicateur (4) de microondes, le fonctionnement du ou des dispositifs (24, 25) de formation de microondes associés au deuxième applicateur (4) de microondes et/ou du dispositif de transport (6) pouvant être commandé en fonction de la détection par le capteur.

13. Ensemble selon l'une des revendications précédentes, **caractérisé en ce que** les bandes transporteuses (7, 8, 9, 10) guidées sur des rouleaux (17, 18, 19, 20, 21) se déplacent par un bras (52, 53, 54, 55) à travers les applicateurs (3, 4) de microondes concernés, l'autre bras étant guidé du côté extérieur autour de l'applicateur (3, 4) de microondes.

14. Ensemble selon la revendication 13, **caractérisé en ce que** la position d'au moins une partie de rouleau (17, 18, 19, 20, 21) peut être ajustée pour modifier la distance entre les deux bras (52, 53, 54, 55) qui traversent l'applicateur (3, 4) de microondes.
